# EUROPÄISCHE PATENTSCHRIFT

(11) **EP 2 156 746 B1**
(45) Veröffentlichungstag und Bekanntmachung des Hinweises auf die Patenterteilung: **07.12.2011**
(21) Anmeldenummer: 09450147.5
(22) Anmeldetag: 07.08.2009
(51) Int. Cl.: A23G 1/20, B26D 1/00, B26F 3/00

(54) **Schokoladetafel-Brecheinrichtung**
Device for breaking chocolate bars
Dispositif pour le cassage de plaques de chocolat

(30) Priorität: 07.08.2008 AT 12262008
(43) Veröffentlichungstag der Anmeldung: 24.02.2010
(73) Patentinhaber: Zotter Holding GmbH & Co KG, 8333 Kornberg bei Riegersburg (AT)
(72) Erfinder: Zotter, Josel, 8200 Gleisdorf (AT)
(74) Vertreter: Margotti, Herwig Franz

(56) Entgegenhaltungen:
- GB-A- 211 557
- GB-A- 2 270 248
- GB-A- 2 422 291

## Beschreibung

Das Dokument GB2422291 offenbart eine Brecheinrichtung für Schokoladetafeln mit einem waagrechten Grundkörper und einem am Grundkörper gelenkig befestigten Brechstempel.

Die Erfindung betrifft eine Schokoladetafel-Brecheinrichtung, mit der es möglich ist, von einer Schokoladetafel Schokoladestücke zu brechen, ohne hierbei die Schokoladetafel zur Hand nehmen zu müssen. Weiters soll die Schokoladetafel-Brecheinrichtung ermöglichen, Schokoladetafeln in kleinere, jedoch gleich große Teile zu teilen, auch wenn die Schokoladetafel selbst keine Kerben zum Brechen derselben aufweist. Insbesondere kann durch das Abbrechen feiner Streifen einer Schokoladetafel, beispielsweise in einer Stärke von 5 mm, der Schokoladegenuss wesentlich erhöht werden. Das Abbrechen solcher Streifen ist alleine durch Vorsehen von Kerben in einer Schokoladetafel von Hand aus nicht möglich.

Zur Lösung dieser Aufgabe weist die Schokoladetafel-Brecheinrichtung eine Schokoladetafel-Zuführschurre und einen zur Zuführschurre und entgegengesetzt bewegbaren Brechstempel auf

Vorzugsweise ist die Zuführschurre auf einer Basisplatte montiert und schließt mit der Ebene der Basisplatte einen Winkel ein und ist mit einer ein Abwärtsgleiten einer Schokoladetafel in der Zuführschurre um einen vorbestimmten Betrag unterhalb des Brechstempels festlegenden Begrenzung versehen, wobei zweckmäßig die Zuführschurre an ihrem unteren Ende mit einer in einem Winkel zu ihr angeordneten Auslaufschurre versehen ist, welche Auslaufschurre eine Begrenzung für das Abwärtsgleiten einer Schokoladetafel in der Zuführschurre bildet.

Zum Erzielen einwandfreier Schokoladetafelstücke, und zwar auch bei härterer Schokolade, trägt vorzugsweise der Brechstempel an seinem vorderen Ende eine messerartige Schneide.

Eine einfache Handhabung ist dann gewährleistet, wenn der Brechstempel mittels eines Schwenkhebels gegen die Zuführschurre und entgegengesetzt bewegbar ist, wobei zweckmäßig zur Herabsetzung der zum Zerteilen der Schokoladetafel erforderlichen Kräfte der Schwenkhebel als zweiarmiger Hebel ausgebildet ist.

Vorzugsweise ist der Brechstempel mit einer im Winkel zur Zuführschurre angeordneten Führung geführt.

Zur einwandfreien Hygiene und zwecks leichter Reinigung der Schokoladetafel-Brecheinrichtung ist diese aus rostfreiem Stahl gebildet. Selbstverständlich können jedoch auch andere Materialien, wie beispielsweise Kunststoff, dafür eingesetzt werden.

Zwecks einfacher Bedienung der Schokolade-Brecheinrichtung ist der Brechstempel mittels Federkraft in eine von der Zuführschurre zurückgezogene Position bewegbar.

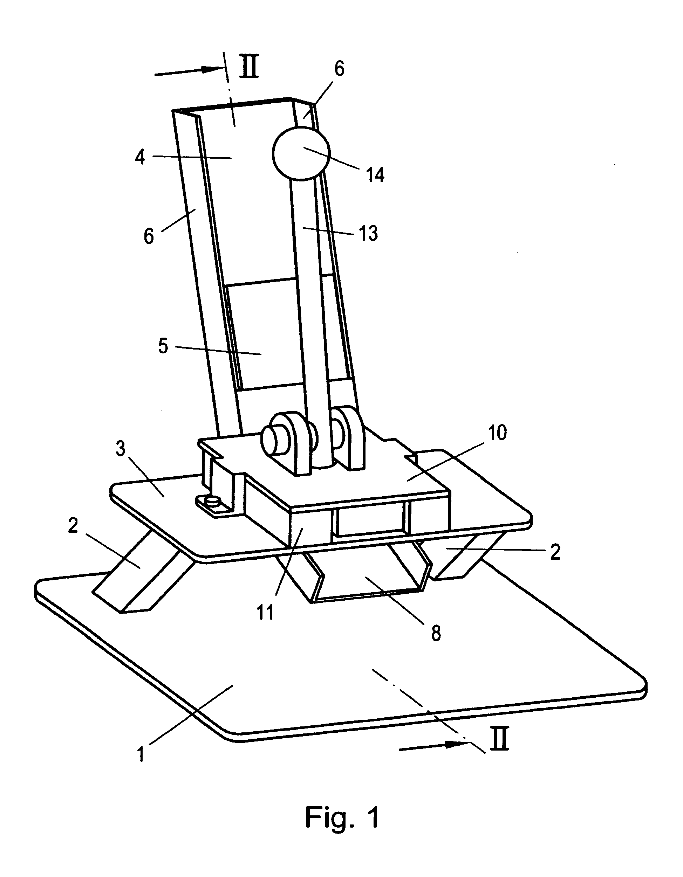

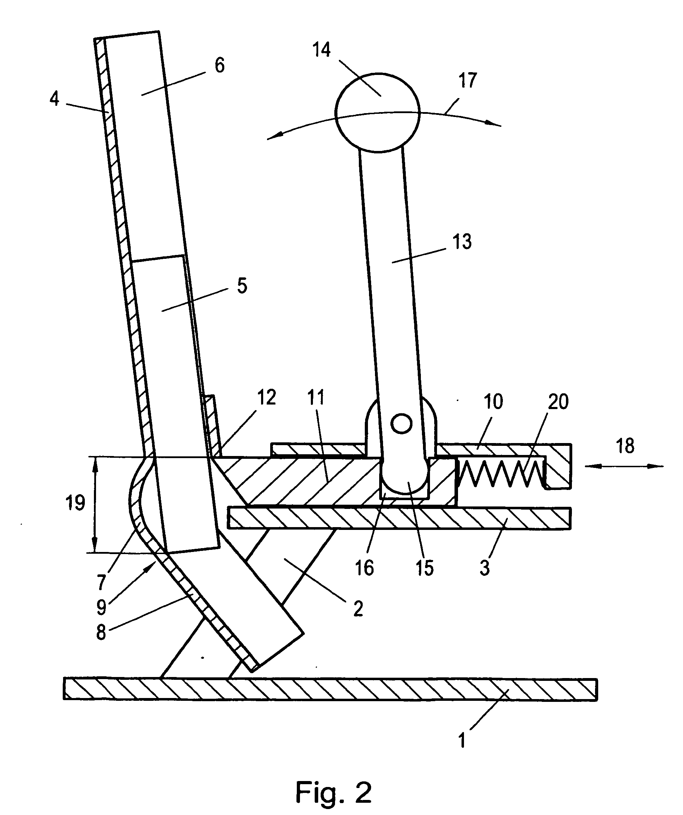

Die Erfindung ist nachfolgend anhand eines Ausführungsbeispiels in der Zeichnung näher erläutert, wobei Fig. 1 eine Schrägrissdarstellung der Schokoladetafel-Brecheinrichtung und Fig. 2 einen Schnitt entlang der Linie II-II der Fig. 1 zeigen.

Die Schokoladetafel-Brecheinrichtung weist eine Basisplatte 1 auf, auf der mittels zweier Stützen 2 eine zur Basisplatte 1 vorzugsweise parallele Halteplatte 3 montiert ist. An dieser Halteplatte 3 ist eine sich nach oben erstreckende Schokoladetafel-Zuführschurre 4 befestigt, in die eine Schokoladetafel 5 einsetzbar ist. Diese Zuführschurre weist seitliche Führungsleisten 6 auf, sodass die Schokoladetafel 5 sicher geführt ist. Die Neigung der Zuführschurre 4 gegenüber der Basisplatte 1 ist derart gewählt, dass die Schokoladetafel 5 durch die Schwerkraft über die Schokoladetafel-Zuführschurre 4 abgleiten kann. Um einen sicheren Halt der Schokoladetafel 5 am unteren Ende der Zuführschurre 4 zu gewährleisten, umgibt die Zuführschurre 4 an diesem unteren Ende die Schokoladetafel 5 allseitig.

Am unteren Ende 7 der Zuführschurre 4 ist eine Auslaufschurre 8 befestigt, die mit der Zuführschurre 4 auch integral ausgebildet sein kann. Diese Auslaufschurre 8 weist einen Neigungswinkel auf, der geringer ist als der der Zuführschurre 4, sodass die Schokoladetafel 5 beim Abgleiten über die Zuführschurre 4 an dieser Auslaufschurre 8 ansteht.

Knapp oberhalb des Knickpunktes 9 zwischen Zuführschurre 4 und Auslaufschurre 8 ist in einer an der Halteplatte 3 angeordneten Führung 10 ein Brechstempel 11, der am vorderen Ende mit einer messerartigen Schneide 12 versehen ist, zur Zuführschurre 4 und entgegengesetzt bewegbar. Zur Bewegung des Brechstempels 11 ist an der Oberseite der Führung 10 des Brechstempels 11 ein zweiarmiger Schwenkhebel 13 angelenkt, dessen oberes Ende einen Handknauf 14 aufweist. Das untere Ende 15 des zweiarmigen Schwenkhebels 13 ragt in eine Ausnehmung 16 des Brechstempels 11 oder ist mit diesem dort gelenkig verbunden, sodass eine Vor- und Zurückbewegung des Hebels 13 in Richtung des Doppelpfeils 17 der Fig. 2 eine Bewegung des Brechstempels 11 in Richtung des Doppelpfeils 18 zur Zuführschurre 4 bzw. entgegengesetzt bewirkt.

Um ein Abbrechen eines Schokoladestücks von der Schokoladetafel 5 zu erleichtern, ist das untere Ende 7 der Zuführschurre 4 nach außen konvex gestaltet.

Die Größe der von der Schokoladetafel 5 abgebrochenen Stücke richtet sich nach der Höhendistanz 19 zwischen der messerartigen Schneide 12 und dem Knickpunkt 9 zwischen der Zuführschurre 4 und der Auslaufschurre 8.

Zwecks einfacher Handhabung ist der Brechstempel 11 mittels einer an ihm befestigten Schraubenfeder 20, deren zweites Ende an der Führung 10 befestigt ist, in die in Fig. 2 dargestellt Position bewegbar, in der der Brechstempel 11 von der Zuführschurre 4 am weitesten distanziert ist.

Die Erfindung beschränkt sich nicht auf das in der Zeichnung dargestellte Ausführungsbeispiel. Beispielsweise kann der Brechstempel 11 auch auf andere Art bewegt werden als durch einen Schwenkhebel. Hier kann auch ein Schiebehandgriff oder ein motorischer Antrieb oder dergleichen angesetzt werden.

Es ist auch möglich, eine Begrenzung für das Herabsinken der Schokoladetafel 5 entlang der Zuführschurre 4 vorzusehen, die höhenmäßig verstellbar ist, sodass eine Einstellung unterschiedlich großer von der Schokoladtafel 5 abgebrochener Stücke möglich ist. Diese Begrenzung könnte beim Bewegen des Brechstempels 11 bis zur Anlage an der Schokoladetafel 5 die Schokoladetafel 5 freigeben, sodass das abgebrochene Stück abgleiten kann, worauf die Begrenzung wiederum, und zwar nach Wegbewegen des Brechstempels 11 von der Zuführschurre, in diese zur Begrenzung des Herabgleitens der Schokoladetafel 5 eintritt.

## Patentansprüche

1. Schokoladetafel-Brecheinrichtung, **gekennzeichnet durch** eine Schokoladetafel-Zuführschurre (4) und einen zur Zuführschurre (4) und entgegengesetzt bewegbaren Brechstempel (11).

2. Schokoladetafel-Brecheinrichtung nach Anspruch 1, **dadurch gekennzeichnet, dass** die Zuführschurre (4) auf einer Basisplatte (1) montiert ist und mit der Ebene der Basisplatte (1) einen Winkel einschließt und mit einer ein Abwärtsgleiten einer Schokoladetafel (5) in der Zuführschurre (4) um einen vorbestimmten Betrag unterhalb des Brechstempels (11) festlegenden Begrenzung (9) versehen ist.

3. Schokoladetafel-Brecheinrichtung nach Anspruch 2, **dadurch gekennzeichnet, dass** die Zuführschurre (4) an ihrem unteren Ende (7) mit einer in einem Winkel zu ihr angeordneten Auslaufschurre (8) versehen ist, welche Auslaufschurre (8) eine Begrenzung für das Auswärtsgleiten einer Schokoladetafel (5) in der Zuführschurre (4) bildet.

4. Schokoladetafel-Brecheinrichtung nach einem der Ansprüche 1 bis 3, **dadurch gekennzeichnet, dass** der Brechstempel (19) an seinem vorderen Ende eine messerartige Schneide (12) trägt.

5. Schokoladetafel-Brecheinrichtung nach einem der Ansprüche 1 bis 4, **dadurch gekennzeichnet, dass** der Brechstempel (11) mittels eines Schwenkhebels (13) gegen die Zuführschurre (4) und entgegengesetzt bewegbar ist.

6. Schokoladetafel-Brecheinrichtung nach Anspruch 5, **dadurch gekennzeichnet, dass** der Schwenkhebel (13) als zweiarmiger Hebel ausgebildet ist.

7. Schokoladetafel-Brecheinrichtung nach einem der Ansprüche 1 bis 6, **dadurch gekennzeichnet, dass** der Brechstempel (11) mit einer im Winkel zur Zuführschurre (4) angeordneten Führung (10) geführt ist.

8. Schokoladetafel-Brecheinrichtung nach einem der Ansprüche 1 bis 7, **dadurch gekennzeichnet, dass** sie aus rostfreiem Stahl gebildet ist.

9. Schokoladetafel-Brecheinrichtung nach einem der Ansprüche 1 bis 8, **dadurch gekennzeichnet, dass** der Brechstempel (11) mittels Federkraft in eine von der Zuführschurre (4) zurückgezogene Position bewegbar ist.

## Claims

1. A chocolate bar crushing device, **characterized by** a chocolate bar feed chute (4) and a crusher stamp (11) movable to the feed chute (4) and in the opposite direction thereof.

2. A chocolate bar crushing device according to claim 1, **characterized in that** the feed chute (4) is mounted on a base plate (1) and encloses with the plane of the base plate (1) an angle and is provided with a limitation (9) determining a sliding of the chocolate bar (5) downwards in the feed chute (4) by a predetermined distance underneath the crusher stamp (11).

3. A chocolate bar crushing device according to claim 2, **characterized in that** the feed chute (4) is provided at its lower end (7) with an exit chute (8) arranged at an angle thereto, which exit chute (8) forms a limitation for the sliding of a chocolate bar (5) upwards in the feed chute (4).

4. A chocolate bar crushing device according to any of claims I to 3, **characterized in that** the crusher stamp (19) carries at its front end a knife-like blade (12).

5. A chocolate bar crushing device according to any of claims 1 to 4, **characterized in that** the crusher stamp (11) is movable by means of a swivelling lever (13) against the feed chute (4) and in the opposite direction thereof.

6. A chocolate bar crushing device according claim 5, **characterized in that** the swivelling lever (13) is formed as a two-arm lever.

7. A chocolate bar crushing device according to any of claims 1 to 6, **characterized in that** the crusher stamp (11) is guided with a guidance (10) arranged at an angle to the feed chute (4).

8. A chocolate bar crushing device according to any of claims 1 to 7, **characterized in that** it is formed of stainless steel.

9. A chocolate bar crushing device according to any of claims 1 to 8, **characterized in that** the crusher stamp (11) is movable by means of spring force into a position retracted from the feed chute (4).

## Revendications

1. Dispositif pour briser des plaquettes de chocolat, **caractérisé par** une rampe d'amenée de plaquettes de chocolat (4) et par un poinçon-briseur (11) déplaçable en direction de la rampe d'amenée (4) et en direction opposée.

2. Dispositif pour briser des plaquettes de chocolat selon la revendication 1, **caractérisé en ce que** la rampe d'amenée (4) est montée sur une plaque de base (1) et définit avec le plan de la plaque de base (1) un angle, et est pourvue d'une délimitation (9) qui fixe un coulissement descendant d'une plaquette de chocolat (5) dans la rampe d'amenée (4) à une distance prédéterminée au-dessous du poinçon-briseur (11).

3. Dispositif pour briser des plaquettes de chocolat selon la revendication 2, **caractérisé en ce que** la rampe d'amenée (4) est pourvue à son extrémité inférieure (7) d'une rampe de sortie (8) formant un angle par rapport à la rampe d'amenée (4), ladite rampe de sortie (8) formant une délimitation pour le coulissement descendant d'une plaquette de chocolat (5) dans la rampe d'amenée (4).

4. Dispositif pour briser des plaquettes de chocolat selon l'une des revendications 1 à 3, **caractérisé en ce que** le poinçon-briseur (19) porte à son extrémité antérieure un tranchant (12) semblable à un couteau.

5. Dispositif pour briser des plaquettes de chocolat selon l'une des revendications 1 à 4, **caractérisé en ce que** le poinçon-briseur (11) est déplaçable au moyen d'un levier pivotant (13) vers la rampe d'amenée (4) et en sens opposé.

6. Dispositif pour briser des plaquettes de chocolat selon la revendication 5, **caractérisé en ce que** le levier pivotant (13) est réalisé sous forme de levier à deux bras.

7. Dispositif pour briser des plaquettes de chocolat selon l'une des revendications 1 à 6, **caractérisé en ce que** le poinçon-briseur (11) est guidé avec un guidage (10) agencé sous un angle par rapport à la rampe d'amenée (4).

8. Dispositif pour briser des plaquettes de chocolat selon l'une des revendications 1 à 7, **caractérisé en ce qu'**il est réalisé en acier inoxydable.

9. Dispositif pour briser des plaquettes de chocolat selon l'une des revendications 1 à 8, **caractérisé en ce que** le poinçon-briseur (11) est déplaçable sous l'action d'un ressort jusque dans une position rétractée par rapport à la rampe d'amenée (4).
